# EUROPEAN PATENT APPLICATION

(11) **EP 4 844 262 A1**
(43) Date of publication of application: **25.11.2026**
(21) Application number: 26174667.1
(22) Date of filing: 27.04.2026
(51) Int. Cl.: F17C 13/04, G05D 7/01

(54) **CONNECTOR, GAS VALVE AND GAS APPLIANCE**

(30) Priority: 20.05.2025 CN 202510654447
(71) Applicant: Chant Heat Energy Science Technology (Zhongshan) Co., Ltd., Zhongshan, Guangdong 528415 (CN)
(72) Inventor: Deng, Xianmin, Zhongshan City, Guangdong, 528415 (CN); Yao, Biaocheng, Zhongshan City, Guangdong, 528415 (CN); Pan, Junge, Zhongshan City, Guangdong, 528415 (CN); Mai, Guangzhi, Zhongshan City, Guangdong, 528415 (CN)
(74) Representative: Petraz, Gilberto Luigi

(57) **Abstract**

Disclosed are a connector, a gas valve, and a gas appliance. The connector includes: a housing, the housing is provided with a gas flow channel, an air inlet, and an air outlet inside; an over-flow protection structure, disposed in the gas flow channel, including an elastic sheet and a blocking member abutting against the elastic sheet, the elastic sheet includes an outer fixing ring and a plurality of elastic segments disposed on the outer fixing ring, the plurality of elastic segments may change from an expanded state to a retracted state under the push of the blocking member in response to a flow rate of the air inlet being greater than a preset flow rate, so as to at least realize a reduction of a flow area of the gas flow channel. In the connector in the present invention, the over-flow protection structure is provided in the housing, and may adjust the flow area of the gas flow channel in response to the flow rate of the air inlet being greater than the preset flow rate, avoiding dangerous situations of excessively high flame at the stove end.

## Description

### TECHNICAL FIELD

The present invention relates to the technical field of gas valves, and in particular relates to a connector, a gas valve, and a gas appliance.

### BACKGROUND

The connector is a component provided at the air inlet end of a gas valve and used for connecting to a gas cylinder, so as to realize the input of gas from the gas cylinder into the gas valve, for output by the gas valve to the gas appliance end. However, the connector in the prior art only implements a connection function; it does not have a protective effect in response to changes in the external environment, such as excessive inlet pressure, thereby leading to the gas appliance end possibly experiencing intense combustion, and even carrying the risk of fire.

### SUMMARY

In order to solve at least one problem existing in the above-mentioned prior art, according to a first aspect of the present invention, a connector is provided, including:

a housing, where an interior of the housing is provided with a gas flow channel, an air inlet, and an air outlet;

an over-flow protection structure, disposed in the gas flow channel, including an elastic sheet and a blocking member abutting against the elastic sheet, where the elastic sheet includes an outer fixing ring and a plurality of elastic segments disposed on the outer fixing ring, and where the plurality of elastic segments are configured to, in response to a flow rate at the air inlet being greater than a preset flow rate, change from an expanded state to a retracted state under pushing of the blocking member so as to at least achieve a reduction in a flow area of the gas flow channel.

In some implementations, a gap is configured between every two adjacent elastic segments upon the elastic segment being in the retracted state, and the elastic segment is configured to apply an elastic force to the blocking member so as to reset to the expanded state.

In some implementations, a width l of the gap is configured to be in a range of 0.1 mm to 0.3 mm.

In some implementations, a range of a maximum distance L between every two adjacent elastic segments is configured to be from 0.7 mm to 1 mm upon the elastic segment being in the expanded state.

In some implementations, an end of each of the elastic segments away from the outer fixing ring is provided with a notch.

In some implementations, the blocking member is spherical.

In some implementations, the connector further includes an over-temperature protection structure, the over-temperature protection structure and the over-flow protection structure are arranged side by side in the gas flow channel, and the over-temperature protection structure is configured to soften in response to an ambient temperature being greater than a preset temperature so as to block the gas flow channel.

In some implementations, the gas flow channel includes a first section and a second section, an inner diameter of the first section is configured to be smaller than that of the second section, the first section is disposed facing the air outlet, and the second section is disposed facing the air inlet;

the over-temperature protection structure includes a plastic member and an elastic member, the plastic member is disposed facing the first section so as to block the first section in a softened state, and the elastic member is disposed on the second section and configured to apply an elastic force to the plastic member.

A second aspect of the present invention provides a gas valve, including the connector described above.

A third aspect of the present invention provides a gas appliance, including the gas valve described above.

In summary, the connector, the gas valve, and the gas appliance provided by the present invention have the following technical effects:

The over-flow protection structure is provided in the housing, so that the flow area of the gas flow channel is reduced by the blocking member driving a plurality of elastic segments to change from an expanded state to a retracted state in response to the flow rate at the air inlet being greater than a preset flow rate under the driving of the gas flow, the gas flow entering from the air inlet may not flow out through the air outlet or may not flow out in large quantities from the air outlet at this time, leading to avoiding the dangerous situation of excessively high flames at the burner end.

### BRIEF DESCRIPTION OF THE DRAWINGS

FIG. 1 is a perspective schematic diagram of a connector according to an embodiment of the present invention.
FIG. 2 is a structural schematic diagram of the connector in FIG. 1.
FIG. 3 is a cross-sectional schematic diagram taken along line A-A in FIG. 2.
FIG. 4 is a perspective schematic diagram of the elastic sheet in an expanded state in FIG. 3.
FIG. 5 is a structural schematic diagram of the elastic sheet in FIG. 4.
FIG. 6 is a structural schematic diagram of the elastic sheet in a retracted state in FIG. 3.
FIG. 7 is a structural schematic diagram of the plastic member in FIG. 3.

Reference Numerals: 100: connector; 10: housing; 11: gas flow channel; 12: air inlet; 13: air outlet; 14: first section; 15: second section; 151: first part; 152: second part; 153: third part; 154: first step surface; 155: second step surface; 20: over-flow protection structure; 21: elastic sheet; 211: outer fixing ring; 212: elastic segment; 213: air flow channel; 214: notch; 215: gap; 22: blocking member; 30: over-temperature protection structure; 31: plastic member; 311: flow channel groove; 32: elastic member; 40: mounting plate.

### DETAILED DESCRIPTION

For better understanding and implementation, the technical solutions in the embodiments of the present invention will be described clearly and completely below in combination with the accompanying drawings in the embodiments of the present invention.

In the description of the present invention, it should be noted that the terms "upper", "lower", "front", "rear", "left", "right", "vertical", "horizontal", "top", "bottom", "inner", "outer" and the like indicate orientations or positional relationships based on the orientations or positional relationships shown in the accompanying drawings, and are only for facilitating the description of the present invention and simplifying the description, rather than indicating or implying that the referred apparatus or element must have a specific orientation, be constructed and operated in a specific orientation, and therefore should not be construed as limiting the present invention.

Unless otherwise defined, all technical and scientific terms used herein have the same meanings as commonly understood by those skilled in the technical field of the present invention. The terms used in the specification of the present invention herein are only for the purpose of describing specific embodiments and are not intended to limit the present invention.

The present invention will be described in further detail below in combination with the accompanying drawings.

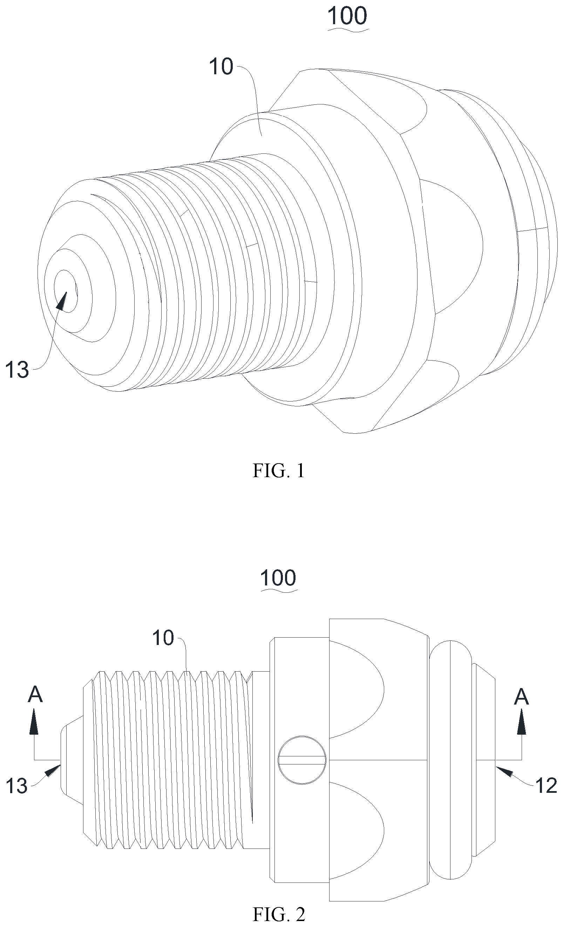

Referring to FIGS. 1 to 7, a connector 100 provided by an embodiment of the present invention includes a housing 10 and an over-flow protection structure 20.

An interior of the housing 10 is provided with a gas flow channel 11, an air inlet 12, and an air outlet 13; the over-flow protection structure 20 is disposed in the gas flow channel 11, including an elastic sheet 21 and a blocking member 22 abutting against the elastic sheet 21, the elastic sheet 21 includes an outer fixing ring 211 and a plurality of elastic segments 212 disposed on the outer fixing ring 211, the plurality of elastic segments 212 may change from an expanded state to a retracted state in response to the flow rate at the air inlet 12 being greater than a preset flow rate and being pushed by the blocking member 22, so as to at least realize a reduction of a flow area of the gas flow channel 11.

In the aforementioned connector 100, by providing the over-flow protection structure 20 inside the housing 10, the blocking member 22 may push the plurality of elastic segments 212 to adjust from the expanded state to the retracted state under the drive of the airflow in response to the flow rate at the air inlet 12 being greater than the preset flow rate, thereby realizing the reduction of the flow area of the air flow channel 213, where the airflow flowing in from the air inlet 12 may not flow out through the air outlet 13 or may not flow out in large amounts from the air outlet 13, avoiding the dangerous situation of excessively high flames at the burner end.

When the gas flow channel 11 is arranged in the housing 10, it is arranged along an axial direction of the housing 10, the air inlet 12 is provided at an end of the housing 10, and the air outlet 13 is provided at an opposite end of the housing 10.

In some implementations, the preset flow rate of the gas flowing in from the air inlet 12 may be set to ≥2.8 m³/h or the preset pressure may be ≥0.7 Mpa, the airflow flowing in from the air inlet 12 will push the blocking member 22 to flow from the air inlet 12 towards the air outlet 13, the movement of the blocking member 22 pushes the retraction of the elastic segments 212, thereby realizing the blocking of the gas flow channel 11.

It should be noted that the retraction of the elastic segments 212 described in this embodiment may refer to the gas flow channel 11 changing from a flow state to a completely closed state, that is, the airflow may not flow at this time; or may refer to changing from the flow state to a reduced flow state, where a small amount of gas may still flow through the elastic sheet 21 and flow out from the air outlet 13.

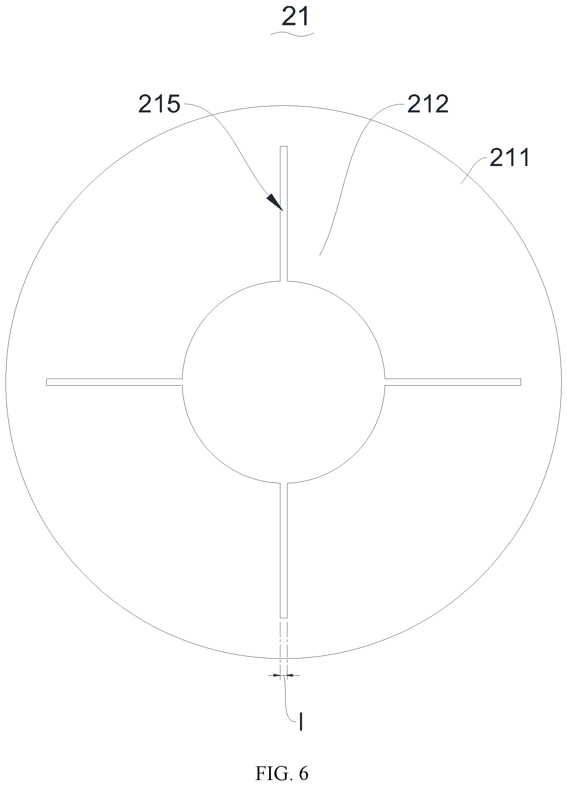

Specifically, referring to FIG. 6, when the elastic segment 212 of the present embodiment is in the retracted state, the flow area of the gas flow channel 11 is in a reduced state, at this time, a gap 215 is provided between every two adjacent elastic segments 212, and the elastic segment 212 may apply an elastic force to the blocking member 22 to reset to the expanded state, thus, after the blocking member 22 blocks on the elastic sheet 21, a small amount of the airflow flowing in from the air inlet 12 may still flow out through the air outlet 13, at this time, the flame at the burner end decreases, the user will close the gas source, gas may only flow in from the air inlet 12 but may not flow out from the air outlet 13, when the air pressure inside the housing 10 is the same as the air pressure at the gas cylinder end, the blocking member 22 is driven back to its original position under the elastic force of the elastic segments 212, and the elastic segments 212 themselves restore to the expanded state, the user may open the gas appliance and continue using it.

In some implementations, the elastic sheet 21 of the present embodiment is made of steel material to ensure its own structural strength and elastic performance, specifically, when forming the elastic sheet 21, since the elastic segment 212 will bend and retract or bend and expanded relative to the outer fixing ring 211, the elastic segment 212 and the outer fixing ring 211 are integrally formed to facilitate molding. In an initial state, the elastic sheet 21 is in a flat plate shape, and the elastic segment 212 is formed by cutting the flat plate-shaped elastic sheet 21.

In some implementations, referring to FIG. 6, when the elastic segment 212 is in the retracted state, a width 1 of the gap 215 between every two connected elastic segments 212 is configured to be in a range of 0.1 mm to 0.3 mm, the total area of the plurality of gaps 215 constitutes the flow area of the gas flow channel 11 after the elastic segments 212 are retracted, thus, the size of the gap 215 is not too large, allowing a small amount of gas flowing in from the air inlet 12 to pass through the gap 215 and then flow out from the air outlet 13, at this time, the burner end may have a small flame, and the decrease of the flame reminds the user to turn off the burner; also, the size of the gap 215 is not too small, avoiding the situation where combustion may not occur when flowing out at the burner end.

For example, the width of the gap 215 may be set to values such as 0.1 mm, 0.15 mm, 0.2 mm, 0.25 mm, or 0.3 mm, which are not limited herein.

Specifically, the present embodiment is provided with 4 elastic segments 212, so that the area of each elastic segment 212 is not too large, that is, the connection area between each elastic segment 212 and the outer fixing ring 211 is not too large to make elastic deformation difficult, and also the connection area between each elastic segment 212 and the outer fixing ring 211 is not too small to have sufficient structural strength, and to avoid the connection area being too small to allow changing from the expanded state to the retracted state under the push of the blocking member 22 under a lower air pressure.

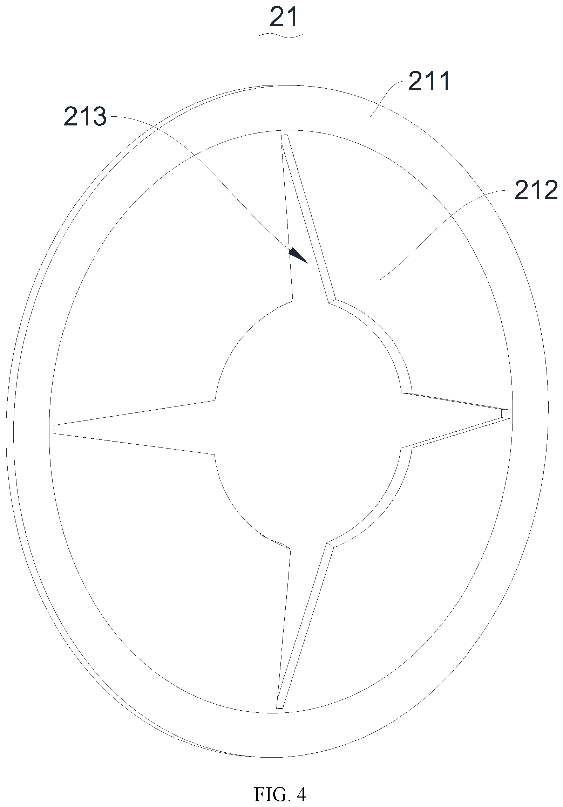

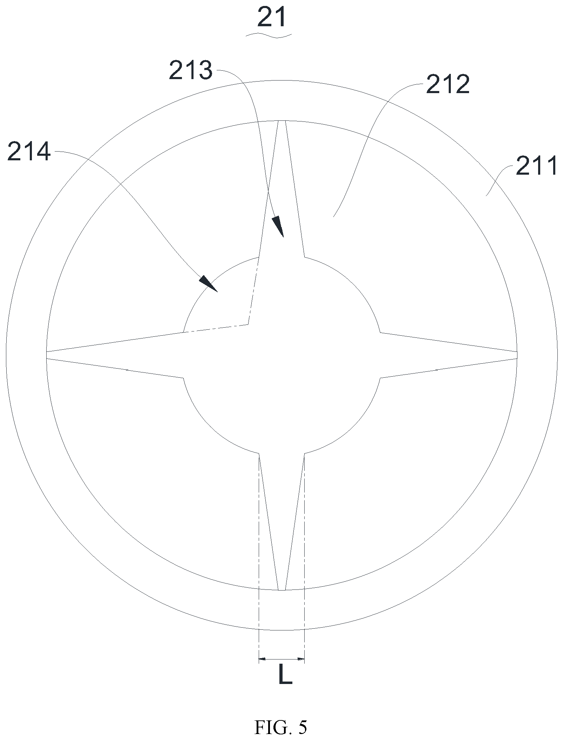

Referring to FIGS. 4 and 5, when the elastic segments 212 are in an expanded state, a distance L between every two adjacent elastic segments 212 gradually increases from an end connected to the outer fixing ring 211 to an end away from the outer fixing ring 211, and a range of a maximum distance L between every two adjacent elastic segments 212 is configured to be 0.7 mm to 1 mm in response to the elastic segments 212 being in the expanded state, specifically, a shape of the distance between every two adjacent elastic segments 212 is similar to a triangle in response to the elastic segments 212 being in the expanded state, which is equivalent to a length of a base of the triangle being configured in a range of 0.7 mm to 1 mm, and a larger flow rate being allowed to flow in from the air inlet 12 to meet usage requirements in a normal state is achieved through setting of the range according to an intake flow rate of the air inlet 12.

In some implementations, a value of the maximum distance L may be set to 0.7 mm, 0.8 mm, 0.9 mm, 1.0 mm, etc. according to an air intake flow rate, and is not limited herein.

Referring to FIG. 5, in one embodiment of the present invention, to avoid scratching of the blocking member 22 by the elastic segments 212, a notch 214 is provided at an end of each elastic segment 212 away from the outer fixing ring 211, thus, in response to the elastic segments 212 being in the expanded state, the tip of the elastic segment 212 is removed through provision of the notch 214, avoiding a risk of the blocking member 22 being scratched by the tip portion in response to the elastic segment 212 abutting against the blocking member 22 in a manner of the tip; further, in response to the elastic segments 212 being in the expanded state through provision of the notch 214, a portion of the blocking member 22 may be located within the notch 214, having a certain contact area with the elastic segment 212, and being capable of being in stable contact with the elastic segment 212.

Specifically, the blocking member 22 of the present embodiment is spherical, being capable of pushing the elastic segments 212 to transition from the expanded state to a retracted state, and since the spherical blocking member 22 is in curved contact with a side wall of the gas flow channel 11, the curved contact has a smaller contact area and less frictional resistance in response to the spherical blocking member 22 being moved by pressure from the air inlet 12, facilitating the blocking member 22 pushing the elastic segments 212 to transition to the retracted state.

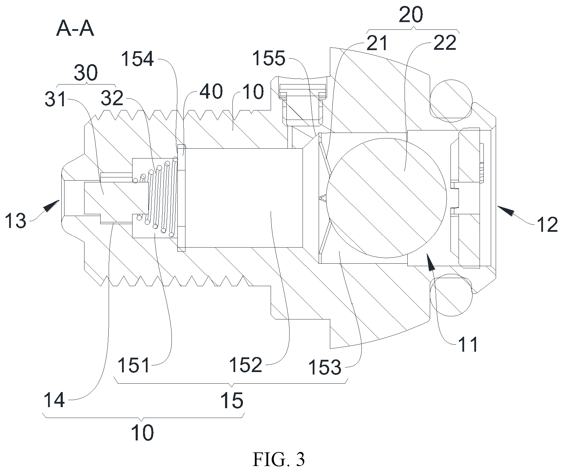

Referring to FIG. 3, in one embodiment of the present invention, to provide protection in response to an external environment being at a high temperature, the connector 100 further includes an over-temperature protection structure 30, the over-temperature protection structure 30 and the over-flow protection structure 20 are arranged side by side in the gas flow channel 11, and the over-temperature protection structure 30 is configured to soften to block the air outlet 13 in response to an ambient temperature being greater than a preset temperature, thus, the over-temperature protection structure 30 gradually softens and blocks the gas flow channel 11 in response to an external ambient temperature rising to reach a softening temperature of the over-temperature protection structure 30, preventing gas from flowing out from the air outlet 13 and avoiding an explosion at a stove end causing harm to a user in response to a high temperature.

Blocking of the gas flow channel 11 may be achieved through thermal expansion increasing a volume of the over-temperature protection structure 30 in response to the over-temperature protection structure 30 softening; or the over-temperature protection structure 30 may be gradually inserted into a section of the gas flow channel 11 with a smaller inner diameter after deforming to achieve blocking of the gas flow channel 11; specifically, the plastic member 31 of the present embodiment is polypropylene or polyethylene, and the plastic member 31 gradually softens and fills the gas flow channel 11 in response to the external environment reaching 80°C.

Specifically, the gas flow channel 11 of the present embodiment includes a first section 14 and a second section 15, the first section 14 has an inner diameter configured to be smaller than that of the second section 15, the first section 14 is arranged facing the air outlet 13, and the second section 15 is arranged facing the air inlet 12;

the over-temperature protection structure 30 includes a plastic member 31 and an elastic member 32, the plastic member 31 is arranged facing the first section 14 to block the first section 14 in a softened state, the elastic member 32 is disposed in the second section 15, configured to apply an elastic force to the plastic member 31, thus the plastic member 31 is pushed by the elastic member 32 to gradually enter the first section 14 having a smaller inner diameter in response to the plastic member 31 softening, and the plastic member 31 flows into and fills the first section 14 in response to further softening into a molten state, thereby achieving blocking of the gas flow channel 11.

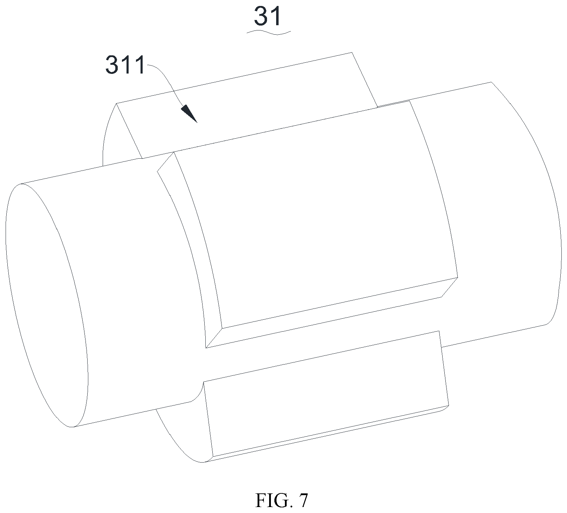

Referring to FIG. 7, to allow gas to smoothly flow out from the air outlet 13 in a normal state, a flow channel groove 311 is provided on an outer wall of the plastic member 31, the flow channel groove 311 is configured for gas to flow through, thereby increasing a gas outflow amount.

Further, to facilitate installation of the over-temperature protection structure 30 and the over-flow protection structure 20, the second section 15 sequentially includes a first portion 151, a second portion 152, and a third portion 153 with inner diameters gradually increasing in a direction from the air outlet 13 to the air inlet 12, thereby forming a first step surface 154 between the first portion 151 and the second portion 152, the connector 100 further includes a mounting sheet 40, the mounting sheet 40 is connected to the first step surface 154 to allow one end of the elastic member 32 to abut against it, thereby enabling application of an elastic force to the plastic member 31; a second step surface 155 is formed between the second portion 152 and the third portion 153, and the elastic sheet 21 is disposed on the second step surface 155 to apply an elastic force to the blocking member 22.

The use process of the above-mentioned connector 100 is: in response to the intake flow rate of the air inlet 12 being greater than a preset flow rate, the gas flow pushes the blocking member 22 to move towards the air outlet 13, the blocking member 22 pushes the elastic segments 212 to adjust from an expanded state to a retracted state, at this time the flow area of the gas is decreasing, the flame at the cooker end is decreasing, the user will turn off the cooker end, with gas continuously flowing in from the air inlet 12, the pressure inside the housing 10 is continuously increasing, in response to the inside and outside of the housing 10 reaching equilibrium, under the elastic force of the elastic segments 212, pushing the blocking member 22 to return to its original position, at this time the elastic segments 212 return to the expanded state and the gas valve may continue to be used; in response to the temperature of the external environment being greater than the softening temperature of the plastic member 31, the plastic member 31 gradually softens to melting, and blocks the first section 14, blocking the gas flow channel 11, at this time gas may not flow out from the air outlet 13, after a high-temperature situation generally occurs, the plastic member 31 may not return to its initial state.

In another embodiment, the present invention further provides a gas valve, including a valve body and the above-mentioned connector 100 disposed in the valve body.

For the above-mentioned gas valve, in response to the connector 100 installed in the valve body having the flow rate of the air inlet 12 greater than a preset flow rate, the blocking member 22 in the connector 100 may push the plurality of elastic segments 212 to adjust from an expanded state to a retracted state, thereby at least realizing a reduction in the flow area of the air flow channel 213, at this time the air flow flowing in from the air inlet 12 may not flow out through the air outlet 13 or may not flow out in large quantities from the air outlet 13, avoiding the dangerous situation of excessively high flame at the cooker end.

In another embodiment, the present invention further provides a gas appliance, including the above-mentioned gas valve.

For the above-mentioned gas appliance, in response to the gas valve being installed with the over-flow protection structure 20, the flow area of the gas flow channel may be adjusted in response to the pressure of the air inlet 12 being greater than a preset pressure, avoiding the dangerous situation of excessively high flame at the cooker end.

The technical means disclosed in the solution of the present invention are not limited to the technical means disclosed in the above-mentioned implementation modes, but also include technical solutions formed by any combination of the above technical features. It should be pointed out that for those of ordinary skill in the art, without departing from the principle of the present invention, several improvements and modifications may also be made, and these improvements and modifications are also considered to be within the protection scope of the present invention.

## Claims

1. A connector (100), comprising:
a housing (10), wherein an interior of the housing (10) is provided with a gas flow channel (11), an air inlet (12), and an air outlet (13);
an over-flow protection structure (20), disposed in the gas flow channel (11), comprising an elastic sheet (21) and a blocking member (22) abutting against the elastic sheet (21), wherein the elastic sheet (21) comprises an outer fixing ring (211) and a plurality of elastic segments (212) disposed on the outer fixing ring (211), and wherein the plurality of elastic segments (212) are configured to, in response to a flow rate at the air inlet (12) being greater than a preset flow rate, change from an expanded state to a retracted state under pushing of the blocking member (22) so as to at least achieve a reduction in a flow area of the gas flow channel (11).

2. The connector (100) according to claim 1, wherein a gap (215) is configured between every two adjacent elastic segments (212) upon the plurality of elastic segments (212) being in the retracted state, and the plurality of elastic segments (212) are configured to apply an elastic force to the blocking member (22) so as to reset to the expanded state.

3. The connector (100) according to claim 2, wherein a width 1 of the gap (215) is configured to be in a range of 0.1 mm to 0.3 mm.

4. The connector (100) according to any one of claims 1 to 3, wherein a range of a maximum distance L between every two adjacent elastic segments (212) is configured to be from 0.7 mm to 1 mm upon the plurality of elastic segments (212) being in the expanded state,.

5. The connector (100) according to any one of claims 1 to 3, wherein an end of each of the plurality of elastic segments (212) away from the outer fixing ring (211) is provided with a notch (214).

6. The connector (100) according to any one of claims 1 to 3, wherein the blocking member (22) is spherical.

7. The connector (100) according to any one of claims 1 to 3, wherein the connector (100) further comprises an over-temperature protection structure (30), the over-temperature protection structure (30) and the over-flow protection structure (20) are arranged side by side in the gas flow channel (11), and the over-temperature protection structure (30) is configured to soften in response to an ambient temperature being greater than a preset temperature so as to block the gas flow channel.

8. The connector (100) according to claim 7, wherein the gas flow channel (11) comprises a first section (14) and a second section (15), an inner diameter of the first section (14) is configured to be smaller than that of the second section (15), the first section (14) is disposed facing the air outlet (13), and the second section (15) is disposed facing the air inlet (12);
the over-temperature protection structure (30) comprises a plastic member (31) and an elastic member (32), the plastic member (31) is disposed facing the first section (14) so as to block the first section (14) in a softened state, and the elastic member (32) is disposed on the second section (15) and configured to apply an elastic force to the plastic member (31).

9. A gas valve, comprising the connector (100) according to any one of claims 1 to 8.

10. A gas appliance, comprising the gas valve according to claim 9.
